# EUROPEAN PATENT APPLICATION

(11) **EP 2 887 602 A1**
(43) Date of publication of application: **24.06.2015**
(21) Application number: 13197699.5
(22) Date of filing: 17.12.2013
(51) Int. Cl.: H04L 29/06, H04L 12/70

(54) **Session level mitigation of service disrupting attacks**

(71) Applicant: Stonesoft Corporation, 00210 Helsinki (FI)
(72) Inventor: Mononen, Risto, 00210 Helsinki (FI)
(74) Representative: Kolster Oy Ab

(57) **Abstract**

There is provided a method for mitigating service disrupting attacks, the method comprising receiving packets during a session between hosts in a packet data network, monitoring the session for information on events, authentication information and/or a cookie, determining a level of trust for the session on the basis of the monitored information.

## Description

### FIELD

The present invention relates to receiving packets during a session between hosts in a packet data network, and more particularly to processing of the packets for mitigating service disrupting attacks such as denial of service (DoS) attacks.

### BACKGROUND

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

In communications systems such as those employing TCP/IP, data is transferred between end users by packets having a header which includes source and destination addresses. In a well behaved system the source and destination addresses allow a network user to communicate with and retrieve information from a server over the Internet. In the present description network users employ network devices which may be included in a Local Area Network (LAN).

In recent years, malicious users of Internet services have been known to temporarily disrupt or even shut down Internet sites. This is typically done by taking advantage of inherent characteristics in the TCP (Transmission Control Protocol) protocol. For example, TCP uses a three-way handshaking protocol on connection set up. The handshake includes an acknowledgement message from the server to the user and one from the user to the server which confirm receipt of a message. An attacker is able to use a false source address (known as spoofing) which means that the server is unable to complete the acknowledgement portion of the protocol handshake. The server holds or stores incomplete or half opened connections for a period of time. During that time interval the attacker can flood the server and ultimately take the server out of service.

Similarly, an attacker wishing to disrupt an end user such as a user of a local area network can flood the LAN with multiple messages each having a phony or spoofed source address. Such an attack is known as a denial of service (DOS) attack which, ultimately, can shut down or deny service to the local area network.

Generally speaking a DoS attack or a distributed denial-of-service (DDoS) attack is an attempt to make a machine or a network resource unavailable to its intended users. A DoS attack generally consists of efforts to temporarily or indefinitely interrupt or suspend services of a host connected to the Internet.

One common method of DoS attack involves saturating the target machine with external communications requests, so much so that it cannot respond to legitimate traffic or responds so slowly as to be rendered essentially unavailable. Such attacks usually lead to a server overload. The DoS attacks may involve several attacking hosts, for example a botnet that generates the traffic towards a target machine causing the target machine to be saturated. In general terms, DoS attacks are implemented by either forcing the targeted computer(s) to reset, or consuming its resources so that it can no longer provide its intended service or obstructing the communication media between the intended users and the victim so that they can no longer communicate adequately.

The DoS attacks may be mitigated by a network firewall that filters the attacking traffic from the received data packets. A typical way to mitigate DoS attacks is to recognise attackers' data flows and drop the packets therein. This recognition relies to the information such as the source Internet Protocol (IP) address derived from the received packets. A simple method to recognise traffic is to recognise data packets that have previously unknown source IP addresses as attacking traffic.

However, the present mitigation methods may not succeed in recognising the data flows correctly, whereby also the legitimate user's packets are dropped or attacking hosts may not be correctly recognised. When the recognition of the traffic is based on known IP addresses, the recognition result of a received data packet may be incorrect because the source host of the data packet is infected with malware, for example a trojan, that allows the hosts to be used in the DoS attacks. On the other hand traffic from a legitimate user may use a new IP address for a first time, a previously unknown IP address, and the legitimate user's data flow may be incorrectly recognised as traffic from an attacker. When the attackers are incorrectly recognised the attackers' packets are processed by the target host, thereby reducing the service availability for the legitimate users.

### BRIEF DESCRIPTION OF SOME EMBODIMENTS

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

An object of the present invention is to provide a method and an apparatus for implementing the method so as to alleviate at least part of the above problems. The objects of the invention are achieved by a method, an apparatus, a computer program and a network which are characterised by what is stated in the independent claims. The preferred embodiments of the invention are disclosed in the dependent claims.

According to an aspect there is provided method for mitigating service disrupting attacks, the method comprising receiving packets during a session between hosts in a packet data network, monitoring the session for information on events, authentication information and/or a cookie, determining a level of trust for the session on the basis of the monitored information.

According to an aspect there is provided an apparatus comprising a processor and a memory storing a computer program, the memory and the computer program configured to, with the processor, cause the apparatus to receiving packets during a session between hosts in a packet data network, monitoring the session for information on events, authentication information and/or a cookie, determining a level of trust for the session on the basis of the monitored information.

According to an aspect there is provided a computer program product comprising executable code that when executed, cause execution of functions of a method according to an aspect.

According to an aspect there is provided a computer program embodied on a distribution medium, comprising program instructions which, when loaded into an electronic apparatus, constitute the functionality of the apparatus.

According to an aspect there is provided a computer program embodied on a non-transitory computer readable storage medium, the computer program being configured to control a processor to perform a method according to an embodiment.

According to an aspect there is provided a network comprising at least one apparatus according to an aspect.

Some embodiments facilitate detection of the known hosts such that the effects of the DoS attacks may be mitigated.

Further improvements will become apparent form the accompanying description.

### BRIEF DESCRIPTION OF THE DRAWINGS

In the following the invention will be described in greater detail by means of preferred embodiments with reference to the drawings, in which
Figure 1 illustrates an architectural view of a communications system, according to an embodiment;
Figure 2a illustrates a method for mitigating service disrupting attacks such as denial of service attacks, according to an embodiment;
Figure 2b illustrates a method for updating trust level information for mitigating service disruption attacks, according to an embodiment;
Figure 3 illustrates processing of received packets by functional units of an apparatus, according to an embodiment;
Figure 4 illustrates sharing of trust level information between co-operating nodes, according to an embodiment;
Figure 5 illustrates updating criteria for trust levels, according to an embodiment;
Figure 6 illustrates an example of criteria information shared between co-operating nodes;
Figures 7a and 7b illustrate an effect of updating criteria for trust levels to processing capacity; and
Figure 8 illustrates an apparatus for carrying out an embodiment.

### DETAILED DESCRIPTION

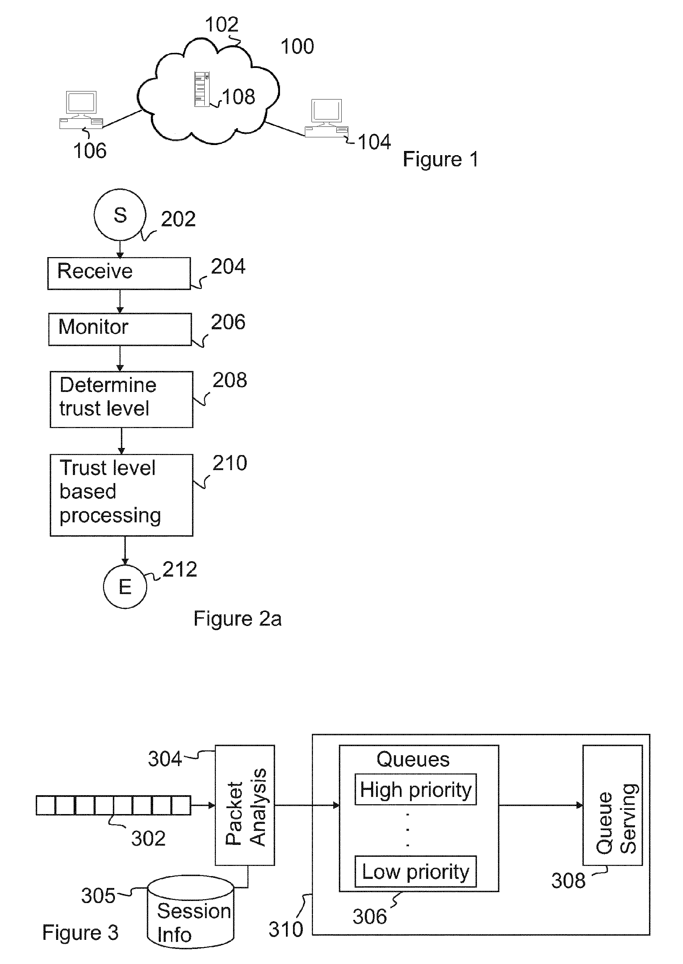

Figure 1 illustrates an architectural view of a communications system 100, according to an embodiment. The communications system comprises hosts 104, 106 in a packet data network 102. The packet data network connects the hosts such that data packets may be transmitted through the packet data network from host to host. The hosts may be connected to different sub-networks of the packet data network. The sub-networks may be interconnected such that data packets may be routed between the hosts via the sub-networks.

The packet data network comprises one or more intermediary network nodes 108. The Intermediary network nodes may receive data packets transmitted by one host and process the received data packets towards the destination host. Accordingly, the hosts may not be directly connected, but the intermediary network node takes care of routing the data packets between the hosts. Examples of the intermediary node comprise a network appliance operating on packet data, a firewall, a network router, a security gateway and a network appliance performing packet forwarding.

In the packet data network the hosts and intermediary nodes may be connected by wireless or wired connections that provide routing of data packets within the packet data network and between the packet data network and other networks. The wired connections may be provided by Ethernet connections. The wireless connections may be provided according to Wireless Local Area Network conforming to the IEEE 802.11 family of standards. Network level connectivity may be provided by Internet Protocol (IP) version 4 or 6 developed by the Internet Engineering Task Force (IETF).

A firewall may comprise system or a group of systems that enforce access control between two networks. A firewall may work closely or be integrated with a router functionality. In this way, the firewall may perform filtering of data packets to determine how the received packets should be processed. The processing may comprise for example forwarding the received packets toward their destination and/or dropping the received packets.

A host may refer to a computer connected to a packet data network. In the packet data network, the host may communicate data packets to other users, e.g. hosts. In this way the hosts may offer information resources, services, and applications to the other users. The host may be identified in the packet data network by a network layer host address, e.g. an IP address.

Figure 2a illustrates a method for mitigating service disrupting attacks such as denial of service attacks, according to an embodiment. Examples of services that may be attacked include web services that are provided by servers to hosts operating as clients. Typically the client has a web browser, for example the Internet explorer or Mozilla, via which the web service is accessed by the client. The method may be performed by a host or an intermediary node of a communications system, for example the communications system of Figure 1. When the method is performed by a host, the service level of applications executed on the host may be maintained or improved by the method. On the other hand, when, the method is performed by an intermediary network node, the service level of sessions served by the intermediary network node between hosts in the packet data network may be maintained and/or improved.

The method may start 202, when one or more hosts are operational in the packet data network and communicating data packets towards a destination host. The data packets may include a destination address, for example an IP addresses.

In 204, one or more data packets are received during a session between hosts in the packet data network. A session may refer to a dialogue of data packets communicated from a source host to a destination host. Examples of the sessions comprise a web browsing session. The web browsing session may be provided by protocols including for example Transport Control Protocol (TCP) and Hyper Text Transfer Protocol (HTTP) that may have corresponding sessions within the web browsing session. More than one data packet may be transmitted in each direction between the hosts during the session. It is also possible that data packets including data, for example application data, are communicated only in one direction, whereby the dialogue is formed by acknowledgement messages between the communicating hosts rather than data packets that include actual data, e.g. application data.

Typically a session is stateful, meaning that at least one of the communicating hosts or all the hosts save information about the session history in order to be able to communicate. Thereby, the future communications between the hosts is dependent on the past communications between the hosts, such that the past communications control, for example limit the future communications. In one example, an authentication of one host to the other, may allow the future communications between the hosts to be limited to the communications only available to authenticated hosts. In one example, an authentication of a web browsing session may allow access to web pages that are only available to authenticated users. This is typical in many services offered on the web, e.g. in banking services.

In one example the states in a session may be determined with respect to an establishment time of the session and/or the time of tear down of the session. Accordingly, the state of the session may be active after establishment of the session and inactive after the tear down of the session. Also other states may be possible. For example after the establishment of the session the states may comprise state information indicating one or more of events, authentication information and/or cookies of the session. The states of the session provide communications between the hosts to be based on the current state. In one example, when the state information indicates authentication in the session of either or both of the hosts, the future communication may take the authentication into account, for example by allowing communication of messages corresponding to the authentication.

In 206 a session is monitored for information on events, authentication information and/or a cookie. The information obtained by the monitoring may be used to determine 208 a trust level of the session for trust level based processing 210 of received packets belonging to the session.

The monitoring may comprise analysis of one or more received data packets in the session. The analysis may include deriving information from the received data packets. The deriving may be performed by decoding and/or decrypting the received packets by a protocol stack that includes at least a network layer protocol and one or more higher layer protocols. The higher layer protocols may include HTTP, TCP, User Datagram Protocol (UDP), Real-time Transport Protocol (RTP), authentication protocols and cryptographic protocols.

In 208 it may be determined whether the information obtained in the monitoring 206 includes information on events, authentication information and/or a cookie. The obtained information may be used to determine a trust level of the session. The session may have a plurality of trust levels. The trust levels may comprise at least two levels of a trusted session and a non-trusted session. Also further levels of trust may be implemented. For example, a plurality of trust levels may comprise in a decreasing order of trust: "known good", "assumed good", "assumed evil", "known evil".

A trust level may be associated with one or more criteria that define requirements for sessions to be categorised into the specific trust level. The criteria for a session to be categorised into a specific trust level may be updated on the basis of the information obtained by monitoring 204.

Determining 208 a trust level and the trust level based processing 210 may be expressed by mathematical functions F for determining the trust level and G for determining the processing based on the determined trust. The functions may be, as follows:
Trust level := x:= F(cookie, session history, authentication, packet) = a * cookie + b * history + c * authentication (1),
processing based on the trust level := G(x) = Integer(x) modulo N_QUEUES (2),
   where the attributes "cookie", "session history", "authentication" and "packet", for the function may be obtained by the monitoring in 206, and where "x" may be the trust level obtained by the function F and "N_QUEUES" may be the number of queues available for processing the received data packets, and "a", "b" and "c" are weighting factors that may be used to adjust the weight of the attributes in the function. It should be appreciated that not all the attributes need to be obtained from the received packet for determining a trust level for the session. However, depending on the criteria of each trust level, if an attribute needed by the criteria of a specific trust level is missing, the criteria may not be met and the trust level is decreased.

Trust levels may be as above "known good", "assumed good", "assumed evil" and "known evil" and the trust levels may correspond respectively with integer values of '4', '3', '2' and '1' obtained by the Integer() function in eq. (2). In this way the function G maybe used to apply trust level based processing to the received data packet. The function G may apply trust level based processing by assigning the received packet to a queue corresponding to the determined trust level. The queues may have different priorities for processing the packets. The priorities may correspond to the levels of trust. Accordingly a high trust level corresponds to a high priority and a low trust level corresponds to a low priority. The lowest priority queue may simply correspond to dropping the received data packet, whereby the data packets that are determined to be processed by that queue are not processed. Such a lowest priority queue may be in fact an empty queue storing no packets.

In one example of trust level based processing 210 using the above trust levels as examples, the determined trust level obtained by function F may be "known evil", which corresponds to integer value '1' obtained by Integer("known evil"). When each trust level has its own queue, the "N_QUEUES" is '4' and the Function G(1) returns '1'. In this way the value returned by the function G may be used to assign the received packet to the queue that correspond to the trust level of the session. The other trust levels have integer values '4', '3', '2' that may be used to assign received packets to a queues similar to the received packet in the session having the trust level "known evil" above.

The priorities of the queues may be implemented in various ways. In one example of processing the received packets in queues corresponding to the determined trust level, the queues may have different service rates. A service rate of the queue may be set corresponding to the trust level of the packets that the queue is to process. Accordingly the received packets that have a high trust level may be assigned to a queue having a higher service rate than a queue, where the received packets that have a low level of trust are assigned to. Non-trusted packets may be dropped. However, it is also possible that non-trusted packets may have their own queue that is served with less priority compared with the queues of the trusted packets.

In another example of prioritizing the processing on the basis of the trust levels, capacity may be allocated for processing of the received packets on the basis of the determined level of trust. The capacity may be measured for example by processor time, memory and/or communications bandwidth. Also or alternatively the capacity may be measured in the size of memory, for example in bytes.

In another example of prioritizing the processing on the basis of the trust levels, different processing resources may be used for the processing depending on the determined trust level. The processing resources may comprise for example processors, central processing units and/or network interfaces. In one example trusted sessions e.g. those having a trust level of "known good" or "assumed good" have separate processing resources from the non-trusted sessions, e.g. those having a trust level of "assumed evil" or "known evil". It is also possible to have separate processing resources for each trust level. By having different processing resources based on the trust level, it is possible to further ensure that enough processing resources are available for the trusted sessions even under a DoS attack.

Processing queues corresponding to trust levels may be implemented by a scheduler that determines how the priority is implemented between the queues, e.g. how capacity is allocated for processing of the queues. The received data packets in the queues may be scheduled for processing as jobs. The scheduler may determine the next jobs to be admitted for execution as processes in an Operating System (OS) and the next process to run in the OS. Several scheduling algorithms may be used, for example a strict priority, where a higher trust level overrides a job and/or a process that has a lower trust level, or a weighted round-robin, where weights corresponding to the trust levels are defined for prioritised scheduling of the jobs and/or processes.

It should be appreciated a queue may be implemented on a storage medium for example a memory that may be readable by a computer. The queue may be also associated with processing resources, for example processors, central processing units and/or network interfaces. The processing resources may be common to all the queues or specific to a part of the queues.

Determining the trust level for the session on the basis of the information obtained by monitoring provides identifying the trusted sessions, e.g. the sessions in categories into "known good" or "assumed good", which are not likely to be part of DoS attacks. Then data packets belonging to those sessions may be served with priority. Since typically only a small part of Internet hosts, for example 0.1%, belong to a botnet. This means that around 1 million hosts of 1 billion hosts would be capable of participating in a DoS attack. On the other hand a web service may have only 100000 users, whereby considering a uniform distribution of polluted hosts and among the web service users, only 100 hosts of the legitimate service users would be polluted. Considering present day data processing equipment capabilities, 100 hosts performing DoS attack to the web service is still manageable without impacting the service availability significantly. This means that identifying the packets belonging to the trusted sessions allows ensuring enough processing capacity for the trusted sessions part of which may include hosts that are participating in a DoS attack.

The trust level function F may determine a trust level as a function of a plurality of protocol headers and data fields to obtain the information of each of the protocols. The information from the protocol layers may be combined and used to determine the trust level of the session. The trust level function may include operations including obtaining information from a received packet. These operations may comprise decrypting the received packet to monitor and evaluate a more comprehensive set of packet attributes than is possible from the cipher text of the encrypted packet.

It should be appreciated that the trust level based processing may be a direct function of the information obtained by the monitoring without an intermediate computation of the trust level.

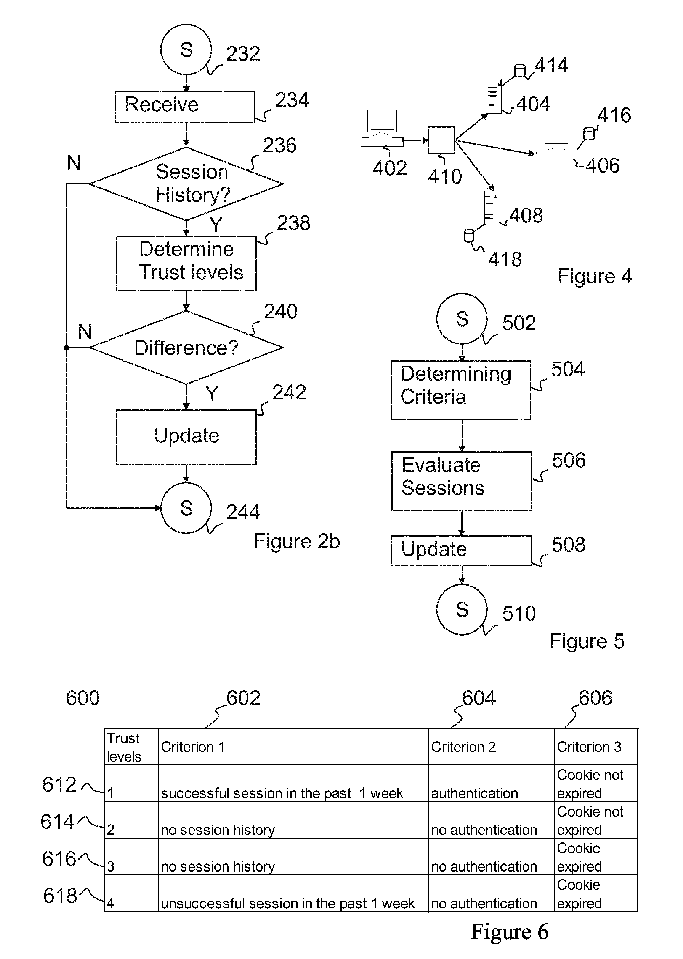

In an embodiment, in determining a trust level of the session, a trust level determined for the session on the basis of information obtained by the monitoring may be compared to a previous trust level and if the comparison indicates a change of the trust level, the previous trust level may be updated to the determined trust level. This will be described in more detail in Figure 2b.

The determined trust level may also be compared to a history of trust levels for associated sessions. The associated sessions may comprise for example sessions of the same user. The user may be identified by authentication information or any other information, e.g. a HTTP cookie, an IP address or a Single Sign-On (SSO) ticket, identifying a communicating party above a network protocol layer. The authentication information may comprise for example information indicating a successful authentication of a user. The successful authentication may be indicated by a confirmed identity of the host or a confirmed identity of the user participating in the session. The authentication may be performed by various ways for example by a user login and user password. It should be appreciated that one of the communicating hosts may authenticate the user or the user may be authenticated by a separate authentication server.

An SSO ticket is an encrypted identification credential with a limited validity period. The SSO ticket indicates that the user is authenticated by a Key Distribution Center (KDC) subsystem. A KDC typically receives a request from a user to use some service. The KDC will use cryptographic techniques to authenticate requesting users as themselves. It will also check whether an individual user has the right to access the service requested. If the authenticated user meets all prescribed conditions, the KDC can issue an SSO ticket permitting access.

Once the user has obtained the SSO ticket, the SSO ticket may be used by several software applications requiring authentication, such as email clients, wikis, revision control systems, etc. without a need to re-authenticate the user e.g. by prompting the user to re-enter credentials. The KDC may be a part of an authentication service such as Kerberos. The ticket contains the session key, its expiration date, and the user's IP address, which protects the user from man-in-the-middle attacks.

In one example, information of authentication may be obtained by the monitoring 206. A previous trust level of the session or the session history may indicate an unauthenticated host in the session. Then a new trust level may be determined for the session on the basis of the obtained information of authentication obtained from the received packet. The information of authentication may indicate for example authentication of a host participating in the session. The new trust level may be updated to the session history of the session.

When the session is determined 208 as a trusted session, for example the session is determined to have a trust level "known good" or "assumed good" categories, the received packets belonging to that session may be processed 210 as trusted. The trusted processing may comprise e.g. routing of the packets towards their destination or passing the packets to their destination application within the host.

When the session is determined 208 as an untrusted session, for example the sessions is determined a trust level "assumed evil" or "known evil" categories, the received packets belonging to that session may be processed 210 as non-trusted. The non-trusted processing may comprise, for example dropping the packets, whereby resources may be freed from serving the packets categorised as un-trusted to serving the packets categorised as trusted.

In an embodiment a trust level may be determined 208 on the basis of a cookie. The information obtained in monitoring may be analysed to determine, whether the information includes a cookie. If there is no cookie, the trust level may be determined on the basis of other information obtained by the monitoring or the trust level may be determined as un-trusted.

A cookie, also known as a Hyper Text Transfer Protocol (HTTP) cookie, web cookie, or browser cookie, is a small piece of data sent from a website and stored in a user's web browser while the user is browsing that website. A firewall may monitor and store the cookies that the website gives to the browsers. Every time the user loads the website, the browser sends the cookie back to the server to notify the website of the user's previous activity.

The cookie may be transmitted when the host is browsing a web page as is conventional. If the obtained information includes a cookie, the trust level for the session may be determined 208 on the basis of the information included within the cookie. Cookies may comprise for example: a name of the cookie, a value of the cookie, an expiry time of the cookie, a network path the cookie is good for, a domain the cookie is good for, information of required connection security for the cookie and/or information whether the cookies may be accessed through other means than HTTP, for example JavaScript. Also other scripting languages for controlling a web browser in a web browsing session may be used than JavaScript, for example VBScript

In one example of determining 208 the level of trust from a cookie, an unexpired cookie may indicate that the session is trusted. Alternatively or additionally, the network path carried by the cookie may indicate that the session is trusted. When a comparison between a next hop routing for a received packet of the session and the network path of the cookie indicates at a match, the session of the packet may be determined a trusted session. Alternatively or additionally, the domain information carried by the cookie may indicate that the session is trusted. When a comparison between a next hop routing domain for a received packet of the session and the domain of the cookie is good for indicates at a match, the session of the packet may be determined a trusted session. Alternatively or additionally, information of required connection security carried by the cookie may indicate that the session is trusted. When the received packet is encrypted and the cookie needs a secure connection, the session of the received packet may be determined as trusted. Examples of cryptographic protocols include Transport Layer Security (TLS) and Secure Sockets Layer (SSL). The encryption of the received packet may be determined in 206, when the packet is decoded.

In an embodiment a trust level may be determined 208 on the basis of an event associated with the session. The information obtained in monitoring may be analysed to determine an event in the session. Events may comprise previous event or present events. One more previous events may form a session history of the session. The events may comprise information of establishments of the session, tear down of the session, previous authentications and/or old cookies in the session. In one example an event may comprise a successful session.

If a session history exists, the trust level for the session may be determined 208 on the basis of the session history. In addition to the events, the session history may store one or more previous trust levels of the session. The trust levels of the session history may be used to determine a new trust level of the session.

It should be appreciated that the information obtained in monitoring 206 may be used to together with the information stored in the session history to determine a trust level for the session. Accordingly, event information and trust levels of the session history may be combined with information obtained from monitoring the received packets in the session, to determine a new trust level.

In an embodiment a trust level may be determined 208 on the basis of authentication information. The authentication information may include information on authentication of one or more hosts in the session. The information obtained in monitoring may be analysed to determine an authentication and derive authentication information for determining the trust level. The authentication information may comprise information of successful authentications. A successful authentication may be used to determine 208 that the session is trusted. A session history may be updated to include the information of the successful authentication.

In an embodiment, a level of trust of a session associated to a received packet may be determined on the basis of session history as described above. The session history may include one or more trust levels and information obtained by monitoring received data packets of the session. The trust level may have been determined on the basis of the information obtained by the monitoring as described above. The trust level for the session may be determined anew on the basis of received packets or the trust level stored in the session history may be used.

In an embodiment, if the obtained information in 206 does not include authentication information, any cookies, or associated session history, the session of the received packet may be determined as non-trusted or simply dropped.

In 212, the trust level for the session has been determined for processing the received packet and the method stops.

Figure 3 illustrates processing of received packets by functional units of an apparatus according to an embodiment. The apparatus may be a host or an intermediary node operating in the communications system of Figure 1. The functional units comprise a packet analyser 304 and a trust level based packet processor 310.

The packet analyser receives packets 302 from a packet data network and obtains information for monitoring the session for information on events, authentication information and/or a cookie. The received packets are determined a level of trust which may be for example any of the trust levels explained above. The received packets may be processed as described in the method of Figure 2a steps 204 to 208 to determine whether they belong to a trusted session.

The trust level based packet processor applies different processing to the received packets on the basis of the trust level determined by the packet analyser. The trust level based processing may be performed for examples as explained in step 210. Accordingly, in the trust level based packet processor the packets that belong to trusted sessions may be given a higher priority than the packets that do not belong to the trusted sessions or belong to sessions that have a decreased level of trust. Accordingly, the trust level based packet processor may assign the received packets to queues 306 corresponding to their trust levels determined in the packet analyser 304. The queues may then be processed by a queue server 308 according to the trust level of the queues. The processing may comprise forwarding the received data packets, dropping the received data packets, adapting service rate of the received data packets and/or updating trust level information between co-operating nodes of a packet data network as will be explained with more detail in Figures 4 and 5.

Referring to Figure 3, session history storage 305 may be connected to the packet analyser. The session history storage receives from the packet analyser information regarding the sessions the received packets belong to. The information may comprise information on events, authentication information, trust level of the session and/or a cookie. The session history storage may in this way store information to be used in determining the level of trust or the determined level of trust by the packet analyser. In this way the future received packets may be processed according to the level of trust of the session.

Figure 2b illustrates a method for updating trust level information for mitigating service disruption attacks. The functions of Figure 2b may be implemented by the functional blocks illustrated in Figure 3. The method may be performed by a host or an intermediary node of a communications system, for example the communications system of Figure 1. The method of Figure 2b may start 232 after a session has been established. An established session has a level of trust that may be determined from monitored information of the session as described in the method of Figure 2a.

In 234, a data packet may be received. The data packets may be associated with a session between hosts in a similar manner as described above in step 204.

In 236, it is determined, whether the received data packet is associated with a session history. The determining may comprise determining the session the received packet belongs to and comparing the information obtained from the session of the received packet to one or more available session histories. A session may be identified on the basis of information derived from the received packets, said information comprising information derived frm multiple protocol layers as described above. The available session histories may be stored to a session history storage, for example. If there is no associated session history for the received data packet, the method ends in 244 without updating trust level information. If the received data packet is associated with a session history, the data packet may belong to a session that has a level of trust. Then in 238 the current level of trust of the session may be determined and a new level of trust for the session may be determined on the basis of monitored information obtained from the received data packet. The current level of trust may be obtained from the session history or be determined on the basis of the session history. The new level of trust may be determined on the basis of the information obtained from the received data packet and the current level of trust as described in steps 204 to 210 in Figure 2a, for example.

In 240, a difference between the new level of trust and the current level of trust is determined. If they are different, the method may proceed to 242 to update the current level of trust with the new level of trust. If the levels of trust are not different the method may end 244 without updating the trust level.

In 242, the current level of trust may be updated with the new level of trust. The updating of the level of trust is now explained using one example of criteria associated with trust levels introduced in the method of Figure 2a. A criteria for the "assumed good" trust level may comprise that all sessions are by default assumed good. A criteria for the "known good" trust level may comprise that an authentication of the host participating in the session is determined during the session. The "assumed good" trust may be a default setting that is set, when the session is established. The level of trust of the session may be updated from "assumed good" to "known good", when the monitored information obtained from the received data packet indicates authentication of the host similar to described in the method of Figure 2a.

In 244, the method ends after the session history has been updated.

In an embodiment a trust level of the session may be updated 242 by comparing the session history with monitored information obtained from one or more received 234 data packets. The result of the comparison 240 may be used to update the trust level of the session. If the comparison indicates no need for update, for example a match between the session history and the monitored information, the trust level may be maintained and process may end 244.

The session history may comprise a cookie that has been previously obtained 208 during a web browsing session of a host. During the web browsing session the cookie may have been received from a server in response to a browsing activity involving communications from the host to the server. The browsing activity may comprise a HTTP request, for example. Then a following cookie received 234, e.g. from the host, during the web browsing session may be used to update the current trust level of the session. The updated trust level may be determined by comparing the new cookie to the previous cookie in the session history. If the new cookie received during the web browsing session matches the previous cookie, the trust level of the web browsing session may be increased 242. Additionally, when the cookies match, the expiry information of the cookie may be checked 238. If 240 the new received cookie is valid, i.e. it matches the cookie stored in the session history and, optionally, if the cookies has not expired. The trust level of the web browsing session may be increased 242.

On the other hand, if 240 the new cookie received during the browsing session from the host is not previously received from the host and/or the received cookie is not valid, the trust level may be decreased 242. In this way the trust level may be adjusted by a dishonest activity of the host trying to present itself as a trusted client.

Figure 4 illustrates sharing of trust level information between co-operating nodes 404, 406, 408 and 410 in a packet data network. The packet data network may be the packet data network of the communications system illustrated in Figure 1. The trust level information may comprise criteria for determining trust levels, information for determining a level of trust for a session and/or trust level information of sessions, as described in above embodiments. In the illustration of Figure 4, a host 402 transmits a data packet during a session between hosts. The data packet is received at the host or the intermediary node 410 that monitors the received packets of the session for information on events, authentication information and/or a cookie. The monitoring may be performed as described above in step 206 of Figure 2a. The operation of the co-operating nodes will now be explained according to an embodiment, where the trust level information comprises criteria for trust levels and with reference to Figure 5 that illustrates updating the criteria for trust levels, according to an embodiment.

The method of Figure 5 starts 502, one or more sessions are established in a packet data network and the packets of the session are received to the host or the intermediary node 410.

In 504, criteria for levels of trust for sessions in a plurality of co-operating nodes are determined. The co-operating nodes may be for example firewalls of the packet data network.

The criteria may be logical functions which compare the received packets with expected header field values, value ranges, bit patterns or other match criteria. The function returns true if and only if the received packet matches the rule. The functions can be combined with logical connectives conjunction, disjunction, negation etc.

In 506, sessions are evaluated on the basis of information derived from received packets of the sessions for determining trust levels of the sessions. The trust levels may be determined as described in Figures 2a and/or 2b. The evaluation may comprise matching the information obtained for example in step 206 of Figure 2a from the received packet with the criteria in step 504 of Figure 5 and result true if the match succeeds and false otherwise for determining the trust level for the session of the received packet. Other results are also possible but they should be from a discrete set of values which can be mapped to the plurality of queues in 306.

In 508, the criteria are updated on the basis of information obtained by the evaluation. The updating may comprise sharing the determined criteria between the co-operating nodes 404, 406, 408, 410. The sharing may be performed by transmitting an update message that includes the updated criteria to the co-operating nodes 404, 406, 408. In this way the criteria may be adjusted by collaboration of the co-operating nodes and the updated criteria of one node may be used in the other nodes for mitigating session level attacks according to an embodiment described herein. The criteria may be stored to a storage device 414, 416, 418 that is accessible for storing and retrieving data for the nodes. The storage devices may further store for example session history information of one or more sessions known to the node associated with the storage device. The method ends 510 after sharing the updated criteria.

An embodiment comprises prioritised processing of queued data packets. The prioritised processing may be provided by an apparatus illustrated in Figure 3, for example. Received packets are processed by two or more queues having different priorities, for example different packet service rates that correspond to different levels of trust. Information for determining trust levels for the received data packets may be obtained from the received data packets, thereby by a single node receiving data packets in a packet data network. It is also possible to receive information for determining trust levels from co-operating nodes of the packet data network as is illustrated in Figure 4. The received information may comprise criteria for determining trust levels, monitoring information for determining a level of trust for a session and/or trust level information of sessions.

The received information may be used to form a session history, whereby the trust level for the received data packets may be determined on the basis of the formed session history. In this way the received packets may be assigned to queues for processing on the basis of the session history and the trust level.

Figure 6 illustrates an example of criteria information 600 shared between co-operating nodes, e.g. in the embodiments described in Figure 4 and/or 5. The criteria information may be included in a data field of a message that is sent from one node to another. The message may be for example a TCP message or a User Datagram Protocol (UDP) message transmitted over IP. The message may be destined to a single node or the message may be a group message, e.g. a multicast message, to a plurality of the co-operating nodes. The criteria information may define criteria 602, 604, 606 for one or more trust levels 612, 614, 616, 618. In the illustrated example, the trust levels trust levels 1 to 4 correspond respectively to the trust levels, "known good", "assumed good", "assumed evil" and "known evil", used in the examples above.

The first requirement field 602 for the trust levels includes a criterion for the session history. For the "known good" trust level the criterion is that the session history includes a successful session in the nearby past, for example within a period of one week. A session may be regarded as successful, when there have been no errors. For the "assumed good" trust level there is no requirement for session history. In this way new users of web services may be categorised as trusted to allow them use the service for the first time. For the "assumed evil" trust level there is also no requirement for the session history. However, since the requirements regarding the session history is the same for the "assumed good" and "assumed evil", the trust levels need to have further requirements to allow their separation. For the "known evil" the criterion for the session history is that there is a recent unsuccessful session, for example an unsuccessful session within a period of the past '1' week.

The second requirement field 604 for the trust levels includes a criterion for the authentication of hosts or users in the session. In the illustration only the "known good" are authenticated, but the rest of the trust levels do not include authentication as a requirement.

The last requirement field 606 for the trust levels defines that the two first trust levels of "known good" and "assumed good" include sessions that have cookies that are not expired. The two last trust levels include sessions that may include cookies that have been expired. Since the "assumed good" category requires an unexpired cookie, the new users may be separated from the "assumed evil" that are not likely new users due to the expired cookie.

The above is only an example and various other criteria may be defined for the trust levels by evaluating the information on events, cookies and authentication of sessions. It should be appreciated that if the criteria for one or more of the trust levels is changed, this affects the distribution of the number of sessions in the different trust levels. Consequently, when a high traffic load is experienced by a node or a host, the criteria may be changed such that the distribution of sessions is concentrated to the categories of "assumed evil" and "assumed good" and "known evil". In this way the number of sessions in the "known good" category may be kept low and sufficient processing capacity of the host or the node may be available to serve the data packets in the "known good" trust level despite the high traffic load. In the embodiments, where criteria information is shared between co-operating nodes, the service level may be in this way maintained and/or even improved in all the co-operating nodes by a single update of the criteria for all the nodes experiencing a high traffic load.

In various embodiments one or more received data packets may be compared to the criteria information for determining a trust level of the session the received data packet belongs to. The session of the received data packet may be determined by deriving information from the received data packets on multiple protocol layers. The protocol layers may comprise protocol layers including and above a network protocol layer, e.g. the IP layer. Examples of protocols above the network layer include HTTP, TCP, UDP, RTP and authentication protocols for example. The information derived from the multiple protocol layers above the network layer provides for determining a trust level of the session of the received data packet and the trust level based processing to be applied for the data packets belonging to the session.

In various embodiments a received data packet in a host or an intermediary node is processed according to the trust level of the session the received data packet belongs to. Each trust level may be allocated processing capacity in the host or the intermediary node. The allocated processing capacity may be determined for each trust level to allow the sessions on that trust level to meet their requirements for Quality of Service. Criteria for the trust levels allows categorising sessions to different trust levels, whereby updating the criteria for the trust levels may be used to move traffic load from a processing capacity allocated to one trust level to a processing capacity allocated to another. Accordingly, when a trust level is experiencing a high traffic load, the criteria for the trust levels that are below the congested trust level may be updated such that the more capacity may be allocated to the higher trust level sessions.

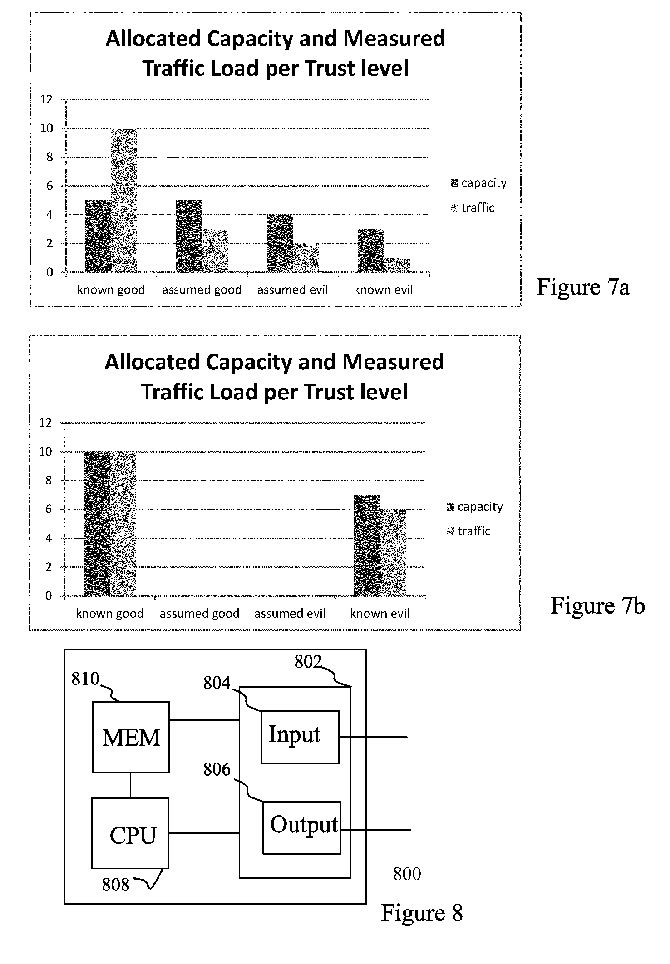

Figures 7a and 7b illustrate an effect of updating criteria for trust levels to processing capacity. The illustration uses the categories for the trust levels introduced above. In the illustration, measured traffic in different trust levels are shown together with allocated processing capacity for each trust level. For the sake of clarity the units of capacity and traffic are shown on the same scale, whereby a single unit of capacity is capable of serving a single unit of traffic. In Figure 7a, the traffic, '10' units, in the "known good" trust level is higher than the allocated capacity, '5' units, for the trust level. The other trust levels have capacity for more traffic than is sufficient processing capacity. In Figure 7b, the criteria of the trust levels are updated. The new criteria may comprise only two trust levels, the "known good" and the "known evil" compared to the four in Figure 7a. In this way at least part of the capacity of the removed trust levels may be allocated to the "known good" to maintain or improve the service level of the trusted sessions. Accordingly, since the number of trust levels is reduced, the sessions that do not meet the criteria of the "known good" are categorised to a single lower trust level, in this case the "known evil". In this way sufficient capacity may be provided for the trusted sessions, as can be seen from the equal size bars.

Accordingly, an embodiment comprises a method including allocating capacity for processing sessions by a plurality of trust levels including a high trust level and a low trust level. A need for more capacity for sessions belonging to the high trust level is determined. A more strict criteria to the low trust level session is determined. The capacity is allocated from the low trust level to the high trust level. In this way criteria for the lower trust levels may be changed such that sessions having a lower trust level than a congested trust level, are moved to one or more lower trust levels or even dropped. The trust levels from high to low may be according to the above example of "known good", "assumed good", "assumed evil", "known evil". In one example, a high traffic in the "known good" would cause tightening the criteria for the "assumed good". In this way traffic from the "assumed good" is shifted for processing in the lower trust levels of "assumed evil" and "known evil". It should be appreciated that it is possible to tighten the criteria of all the trust levels or any of the trust levels below the trust level that is under a high traffic load. Accordingly, changing of the criteria for the trust levels allows flexibility in the allocation of the processing capacity of the sessions, while giving importance to the higher trust level sessions. The above described method may be carried out for example in various embodiments, where data packets are processed on the basis of the trust level of their associated session.

Figure 8 illustrates an apparatus 800 for carrying out an embodiment. The apparatus may be used to implement the functionalities described in the embodiments described herein. Figure 8 is a block diagram of the apparatus 800. Although the apparatus has been depicted as one entity, different modules and memory may be implemented in one or more physical or logical entities. The apparatus may be a host, a client, a server or an intermediary network node, for example a network appliance operating on packet data, a firewall, a network router, a security gateway or a network appliance performing packet forwarding, in a communications system illustrated in Figure 1, for example. Different functions may be performed by different blocks of the apparatus and/or execution of the functions may be shared between parts or between all of the blocks.

The apparatus 800 comprises an interfacing unit 802, a central processing unit (CPU) 808, and a memory 810, that are all being electrically interconnected. The CPU may comprise a single-core or a multi-core processor. The interfacing unit comprises an input 804 and an output unit 806 that provide, respectively, the input and output interfaces to the apparatus. The input and output units may be configured or arranged to send and receive data packets and/or transmissions according to one or more protocols according to communications standards and/or proprietary communications systems including but not limited to: ISA, PCI, Ethernet, SDH, SONET and IEEE 802.11 based Wireless Local Area Network and various cellular communications technologies and any other suitable standard/non-standard communication means. The memory may comprise one or more applications that are executable by the CPU.

The CPU may comprise a set of registers, an arithmetic logic unit, and a control unit. The control unit is controlled by a sequence of program instructions transferred to the CPU from the memory. The control unit may contain a number of microinstructions for basic operations. The implementation of micro-instructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions. The memory may be a volatile or a non-volatile memory, for example EEPROM, ROM, PROM, RAM, DRAM, SRAM, firmware, programmable logic, etc.

An embodiment provides a computer program embodied on a distribution medium, comprising program instructions which, when loaded into an electronic apparatus, cause the CPU to perform according to an embodiment of the present invention.

The apparatus 800 may also be implemented as one or more integrated circuits, such as Application-Specific Integrated Circuits (ASICs). Other hardware embodiments are also feasible, such as a circuit built of separate logic components. A hybrid of these different implementations is also feasible. When selecting the method of implementation, a person skilled in the art will consider the requirements set for the size and power consumption of the apparatus 800, necessary processing capacity, production costs, and production volumes, for example.

It should be appreciated that the various embodiments and examples described above may be combined to provide a functionality according to an embodiment. The functionality may be implemented by an apparatus according to an embodiment by various means described herein. In one example these means comprise program code for execution by an electronic apparatus, for example a computer.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or processor or it may be distributed amongst a number of computers or processors.

The techniques described herein may be implemented by various means so that an apparatus implementing one or more functions described with an embodiment comprises not only prior art means, but also means for receiving packets during a session between hosts in a packet data network, monitoring the session for information on events, authentication information and/or a cookie, determining a level of trust for the session on the basis of the monitored information.

More precisely, the various means comprise means for implementing functionality of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art. Preferably the computer-readable data storage medium is a non-transitory computer-readable data storage.

It will be obvious to a person skilled in the art that, as the technology advances, the inventive concept can be implemented in various ways. The invention and its embodiments are not limited to the examples described above but may vary within the scope of the claims.

## Claims

1. A method for mitigating service disrupting attacks, the method comprising:
receiving packets during a session between hosts in a packet data network;
monitoring the session for information on events, authentication information and/or a cookie;
determining a level of trust for the session on the basis of the monitored information.

2. A method according to claim 1, wherein received packets are queued for processing with different priorities, for example different packet service rates, that correspond to different levels of trust, the method comprising:
assigning the received packets into the queues according to the determined level of trust.

3. A method according to claims 1 or 2, wherein received packets are queued for processing with different priorities, for example different packet service rates, that correspond to different levels of trust, and a plurality of levels of trust are successively determined for the session, the method comprising:
determining a first level of trust for the session on the basis of a first received packet;
determining a second level of trust for the session on the basis of a second received packet;
updating the determined first level of trust of the session on the basis of the determined second level of trust; and
assigning received packets to the queues according to the updated level of trust.

4. A method according to any one of the preceding claims, comprising:
determining criteria for levels of trust for sessions in a plurality of co-operating nodes, for example firewalls, of the packet data network;
evaluating sessions on the basis of information derived from received packets of the sessions for determining trust levels of the sessions;
updating the criteria on the basis of information obtained by the evaluation; and
sharing the determined criteria between the co-operating nodes.

5. A method according to any one of the preceding claims, wherein received packets are processed by two or more queues having different priorities, for example different packet service rates, that correspond to different levels of trust, and session history is formed for a session by obtaining monitoring information from a single node of the packet data network or from co-operating nodes of the packet data network; the method comprising:
receiving a packet associated with the session;
determining a correspondence between the obtained session history and the priorities; and
assigning the received packet into a queue on the basis of the determined correspondence of obtained session history and the priority of the queue.

6. A method according to any one of the preceding claims, the method comprising:
allocating capacity for processing sessions by a plurality of trust levels including a high trust level and a low trust level;
determining a need for more capacity for sessions belonging to the high trust level;
determining a more strict criteria to the low trust level session;
allocating the capacity from the low trust level to the high trust level.

7. A method according to any one of the preceding claims, wherein the events comprise successful sessions.

8. A method according to any one of the preceding claims, wherein the authentication information comprises a confirmed identity, for example a single sign-on ticket, of the host participating in the session.

9. A method according to any one of the preceding claims, wherein the trust level is determined on the basis of the information included in the cookie comprising one or more of: a name of the cookie, a value of the cookie, an expiry time of the cookie, a network path the cookie is good for, a domain the cookie is good for, information of required connection security for the cookie and/or information whether the cookie may be accessed through other means than hyper text transfer protocol, HTTP, for example Javascipt.

10. A method according to any one of the preceding claims, wherein the session comprises a web browsing session or a Transport Control Protocol session.

11. A method according to any one of the preceding claims, wherein the service is a web service.

12. An apparatus comprising means to perform the steps of a method according to any one of claims 1 to 11.

13. An apparatus according to claim 12, wherein the apparatus is a host, a client, a server or an intermediary network node, for example a network appliance operating on packet data, a firewall, a network router, a security gateway or a network appliance performing packet forwarding.

14. A computer program product comprising executable code that when executed, cause execution of functions of a method according to any one of claims 1 to 11.

15. A network comprising at least one apparatus according to any one of claims 12 or 13.
